# EUROPÄISCHE PATENTSCHRIFT

(11) **EP 0 454 875 B1**
(45) Veröffentlichungstag und Bekanntmachung des Hinweises auf die Patenterteilung: **23.02.1994**
(21) Anmeldenummer: 90108144.8
(22) Anmeldetag: 28.04.1990
(51) Int. Cl.: F02D 41/14, F02D 35/00, F02M 7/20

(54) **Regulierungsanlage mit Rückeinwirkung des Titers des Luft-Kraftstoffgemisches zur Speisung eines Verbrennungsmotors, insbesondere eines mit gasförmigem Brennstoff gespeisten Motors**
Feedback control system of air/fuel ratio in internal combustion engines, especially in engines operating with gaseous fuel
Réglage à rétroaction du titre du mélange air-carburant dans les moteurs à combustion interne, en particulier dans les moteurs utilisant un carburant gazeux

(43) Veröffentlichungstag der Anmeldung: 06.11.1991
(73) Patentinhaber: B.B. s.r.l., I-47100 Forli (IT)
(72) Erfinder: Barbanti, Arturo, I-40033 Casalecchio di Reno (BO) (IT)
(74) Vertreter: Rinaldi, Carlo

(56) Entgegenhaltungen:
- DE-A- 3 029 313
- FR-A- 2 577 993
- US-A- 4 385 613

## Beschreibung

Die vorliegende Erfindung betrifft eine Anlage zur Speisung eines Verbrennungsmotors mit einem gasfoermigen Brennstoff; die Anlage umfasst einen Verdampfer- Druckregler, eine zwischen dem Druckregler und einer Speisungsvorrichtung des Gemisches angeordnete Verbindungsleitung, einen im Auslass des Motors angeordneten Fuehler der Sauerstoffkonzentration, eine mit dem Fuehler elektrisch verbundene elektronische Kontrolleinheit und einen mit der Kontrolleinheit elektrisch verbundenen Trieb; wobei die Speisungsvorrichtung eine Drosselklappe aufweist, um den Durchfluss des Gemisches zu steuern. Der Trieb regelt den Durchfluss des Brennstoffes auf Grund von den vom Fuehler stammenden und durch die Kontrolleinheit berarbeiten Signalen.

Aus dem Stand der Technik sind Speisungsanlagen fuer Verbrennungsmotoren bekannt, bei welchen im Auslass angeordnete Sauerstoff-Fuehler verwendet sind, um den Durchfluss des Brennstoffes in Abhaengigkeit von den Sauerstoffkonzentrationen zu aendern, wobei der Brennstoff von Vergasern oder Einspritzungsventilen geliefert ist.

Den bekannten Anlagen liegen die Aufgaben zugrunde, die wesentlich davon abstammen, dass ein Fuehler eine vorbestimmte Betriebstemperatur erreichen soll, um elektrische Signale auszugeben, welche die wirklichen Sauerstoffkonzentrationen in den Abgasen anzeigen.
Liegt der Temperaturwert des Fuehlers unter dem Wert der Betriebstemperatur, so sind die vom Fuehler stammenden Signale nicht zuverlaessig; darum hat die Verarbeitung dieser Signale durch Elektro-nenrechner keine Bedeutung.

Ein Fuehler erreicht seine Betriebstemperatur waehrend des Warmlaufens des Motors; der erforderliche Zeitabstand zur Erreichung dieser Betriebstemperatur haengt von der Umgebungstemperatur und von der Auslaufzeit des Motors ab.

FR-A-2 577 993 betrifft ein kontinuierliches Regulierungsverfahren zur Speisung eines Verbrennungsmotors mit gasförmigem Brennstoff sowie eine Vorrichtung zur Ausführung des Verfahrens.

Das in dieser Unterlage beschriebene Verfahren darin besteht, daß,
a- die Abgase durch eine λ-Sonde analysiert werden;
b- die Signale der λ-Sonde an eine elektronische Kontrolleinheit übertragen werden;
c- der Speisung des Motors durch die Kontrolleinheit kontrolliert wird
Erfindungsgemäß wird die Speisung des Motors in mechanisch veränderlicher Weise durch ein in der Ansaugleitung des Motors angeordnetes Drosselungsglied so ausgeführt, daß ein mageres Gemisch zur Optimierung des Wirkungsgrads oder ein fettes Gemisch zur Optimierung der Leistung bearbeitet ist.

Das an einem Schrittmotor angeschlossene Drosselungsglied bewegt sich zwischen zwei Endanschlägen in Abhängigkeit von dem sigmoiden Signal der λ-Sonde zur Regelung des Durchflusses des zu dem Motor lieferden Brennstoffes.

Dabei wird ein üblicher Computer mit einem internen Zeitgeber, einem Drehzahlsensorkreis und einem Temperatur-Sensor benützt, um wahrend des Starts bis zu einer bestimmten Temperatur die λ-Regelung zu verhindern.

In diesem wie in dem übrigen z.Z. vorliegenden Stand der Technik sind keine Steuerkreise vorgesehen, die die λ-Regelung bei festgestellten Fehlern unterbinden; auch die Einstellung der Endanschläge ist z.Z. aus dem vorliegenden Stand der Technik nicht entnehmbar.

Da sich der Temperatur-Sensor in dem Druckregler befindet, mißt er die nicht die Temperatur der λ-Sonde, sondern eine Temperatur, die den thermischen Zustand des Motors anzeigt. Deshalb bekommt die Kontrolleinheit kein Signal, das den Wirkungszustand des Fühlers bestätigt oder verneint.

Hier will die Erfindung Abhilfe schaffen.
Die Erfindung, wie sie in den Anspruechen gekennzeichnet ist, loest die Aufgabe, eine Regulierungsanlage mit Rueckeinwirkung des Titers des Luft-Kraftstoffgemisches zur Speisung eines Verbrennungsmotors, insbesonders eines mit gasfoermigem Brennstoff gespeisten Motors zu schaffen. Aus der Vervendung der Erfindung entstehet die Sperrung der Kontrolleinheit, so dass dieselbe Kontrolleinheit keine elektrischen Signale an den Trieb waehrend des Warmlaufens des Motors sendet, um eine Steuerung des Triebs auf Grund von nicht zuverlaessigen Signalen zu verhindern.

Die durch die Erfindung erreichten Vorteile sind im wesentlichen darin zu sehen, dass die Erstellung, die Installation und der Betrieb der Erfindung sehr billig sind.

In einer Ausführungsform umfaßt die erfindungsgemäße Anlage die folgenden Glieder:
einen mit einem Behälter für einen gasförmigen oder flüssigen Brennstoff verbundenen Verdampfer-Druckregler;
eine zwischen dem Druckregler und einem Körper eines Drosselventils angeordnete Leitung, um verdampften Brennstoff vom Druckregler an den Körper zu senden;
einen Verbrennungsmotor, der mit einer Ansaugleitung ausgestattet ist, um das Luft-Kraftstoffgemisch in eine Verbrennungskammer des Motors zu führen;
einen Auslaß für die Abgase aus der Verbrennungskammer;
einen innerhalb des Auslasses vorgesehenen Sauerstoff-Fühler (λ-Sonde), um die Sauerstoffkonzentration in den Abgasen zu analysieren;
eine elektronische Kontrolleinheit, die mit dem Fühler elektrisch verbunden ist, um ein elektrisches Signal vom Fühler zu bekommen, wobei ein erster und ein zweiter Pegel des Signals je ein mageres und ein fettes Verhältinis des Luft-Kraftstoffgemisches anzeigen, wobei die Kontrolleinheit mit einem Trieb elektrisch verbunden ist, der mit einem beweglichen Glied ausgestattet ist;
wobei der Trieb aus einem elektromechanischen Wandler besteht;
wobei das bewegliche Glied zwischen einem ersten Endanschlag und einem zweiten Endanschlag läuft und ein Eichungsorgan der Anlage betätigt, um den Durchfluß des vom Druckregler an den Körper gelieferten Brennstoffes zu steuern;
wobei Regulierungsmittel vorgesehen sind, die den ersten Endanschlag und/oder den zweiten Endanschlag begrenzen, um die richtige Regelung des maximalen oder minimalen Durchflusses des Brennstoffes zu erlangen;
wobei die Kontrolleinheit mit Steuerungskreisen ausgestattet ist, die die λ-Regelung bei festgestellten Fehlern des Fühlers und/oder der Anlage unterbinden.

Vorzugsweise sind die folgenden Vorrichtungen in der Anlage vorgesehen:
Dichtungsmittel zur Verhinderung des Eintritts des Gases von der Leitung oder vom Regler in den Trieb zwischen dem Trieb und der Leitung, wobei die Dichtungsmittel für den Schutz des Flusses des gasförmigen Kraftstoffes vor Wirbelbewegungen sorgen, die den Durchfluss des Gases durch die Leitung nicht überwachen lassen;
Verbindungsmittel, die die Dichtungsmittel zur Verbindung des Triebs mit einem Teil der Anlage durchqueren.

In wesentlichem umfaßt die Kontrolleinheit die folgenden Kreise:
einen Anpassungs-und-Schnittstellenkreis des Fühlers, der die Pegel des elektrischen Signals des Fühlers dekodiert;
einen Aussteuerungskreis des Triebs, der an dem Schnittstellenkreis angeschlossen ist, um von dem Schnittstellenkreis Steuerungssignale zu bekommen; die Steuerungssignale veranlassen der Aussteuerungskreis den Trieb so zu steurn, daß das bewegliche Glied das Eichungsorgan betätigt, um das Gemisch zu überfetten oder zu verarmen;
einen Zeitgebungskreis, der an dem Schnittstellenkreis angeschlossen ist, um vom Schnittstellenkreis ein Signal zu bekommen, das die Betriebsbereitschaft des Fühlers anzeigt.

Weitere Vorteile, Einzelheiten und erfindungswesentliche Merkmale ergeben sich aus der nachfolgenden Beschreibung einer bevorzugten Ausführungsbeispiels der Anlage gemäß der Erfindung, unter bezugnahme auf die beigefügten Zeichnungen. Dabei zeigt im einzelnen:
- Figur 1: eine skematich dargestellte Anlage nach einem ersten Ausfuehrungsbeispiel der Erfindung;
- Figur 2: eine skematich dargestellte Anlage nach einem zweiten Ausfuehrungsbeispiel der Erfindung;
- Figur 3: ein erstes Ausfuehrungsbeispiel des Triebs, der bei einer beliebigen der Anlagen der Figuren 1, 2 oder 5 verwendet wird;
- Figur 4: ein zweites Ausfuehrungsbeispiel des Triebs, der bei einer beliebigen der Anlage der Figuren 1, 2 oder 5 verwendet wird;
- Figur 5: einen Einzelteil der Anlage nach einem dritten Ausfuehrungsbeispiel der Erfindung;
- Figur 6: ein Blockschaltbild der Kontrolleinheit, die bei einer beliebigen der Anlagen der Figuren 1, 2 oder 5 verwendet wird.

Die Figuren stellen eine Regulierungsanlage mit Rueckeinwirkung des Titers des Luft-Kraftstoffgemisches zur Speisung eines Verbrennungsmotors, insbesonders eines mit gasfoermigem Brennstoff gespeisten Motors oder Einzelteilen der Anlage dar.

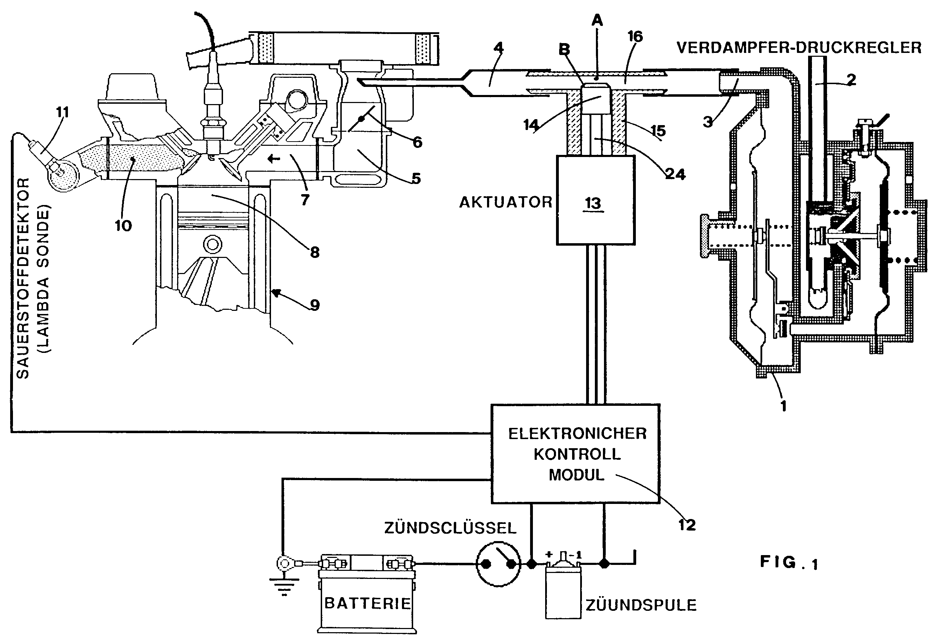

Gemaess Figur 1, umfasst die erfindungsmaessige Anlage einen bekannten Verdapfer-Druckregler 1, der ein Eingansgrohr 2 aufweist, um den Druckregler 1 mit einem Behaelter fuer einen gasfoermigen oder fluessigen Brennstoff zu verbinden, sowie ein Anschlussrohr 3 zum Ausgang vom Druckregler 1 des verdampften Brennstoffes; am Anschlussrohr 3 ist eine Leitung 4 befestigt, die in einen Koerper 5 eines Drosselventils stromauf einer Drosselklappe 6 muendet; durch eine Ansaugleitung 7 wird das Luft-Kraftstoffgemisch in eine Verbrennungskammer 8 des Motors 9 gefuehrt, in welcher es ein Arbeitkreislauf ausfuehrt. Die Abgase laufen aus der Verbrennungskammer 8 durch einen Auslass 10 aus. Ein Sauerstoff-Fuehler 11 (Lambda Sonde) ist innerhalb des Auslasses 10 eingeschraubt, um die in den Abgasen beinhaltete Sauerstoffkonzentration zu analysieren.

Der Fuehler 11 ist mit einem elektronischen Kontrolleinheit 12 elektrisch verbunden, um an die Kontrolleinheit 12 ein elektrisches Signal zu senden; in bekannter Weise, zeigen ein erster und ein zweiter Pegel des Signals je ein mageres und ein Fettes Verhaeltnis des Luft-Kraftstoffgemisches. Die Kontrolleinheit 12 ist mit einem Trieb 13 elektrisch verbunden, der einen Schieber 14 aufweist; der Trieb 13 verstellt den Schieber 14 innerhalb einer Fuehrung 15 von einem ersten Endanschlage A zu einem zweiten Endanschlage B und umgekehrt. Der Schieber 14 ist in der Leitung 4 eingesetzt, darum gehen seine Bewegungen vom Endanschlage A zum Endanschlage B und umgekehrt in einer Richtung vor, die senkrecht auf der longitudinalen Achse der Leitung 4 ist; befindet sich der Schieber 14 im Endanschlage A, so erreicht der Flaecheninhalt des Eichungsquerschnittes 16 des gasfoermigen Brennstoffes seinen kleinsten Wert; befindet sich der Schieber 14 im Endanschlage B, so erreicht der Flaecheninhalt des Eichungsquerschnittes 16 seinen groessten Wert.

Der Schieber 14 ist geeignet, in einer beliebigen Lage gestellt zu werden, die sich zwischen den Endanschlaegen A und B befindet, um den Flaecheninhalt des Eichungsquerschnittes 16 in Abhaengigkeit von Steuerungssignalen zu aendern, welche von der Kontrolleinheit 12 an den Trieb 13 gesandt werden; diese Steuerungssignale werden auf Grund von dem ersten und dem zweiten Pegel des elektrischen vom Fuehler 11 stammenden Signals verarbeitet.

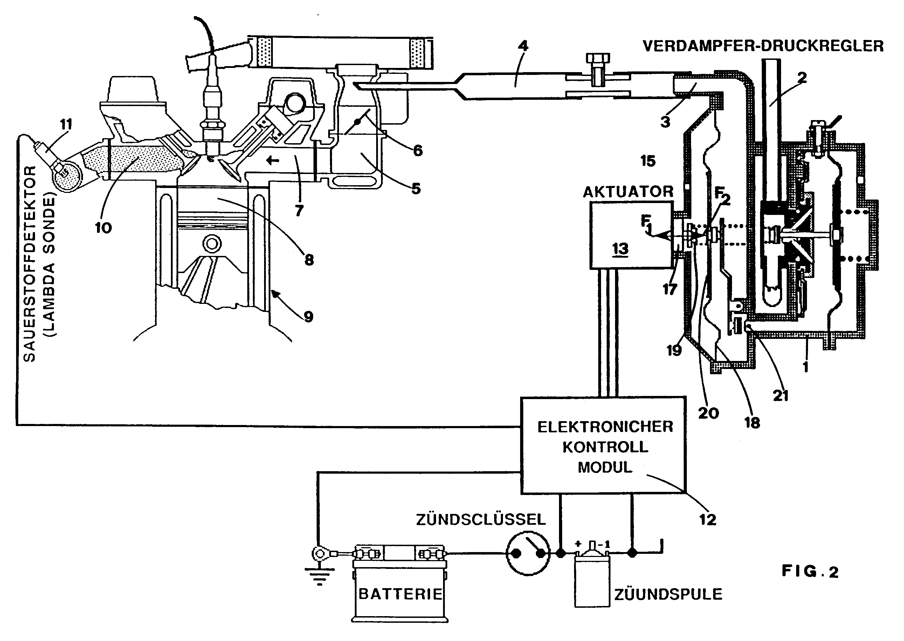

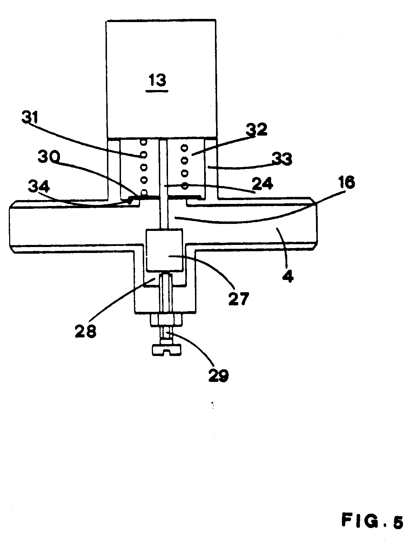

Die Endanschläge A und B sind verstellbar, um die richtige Regelung der maximalen und/oder der minimalen Durchflusses des Brennstoffes zu erlauben; zu diesem Zweck sind bekannte und in den Figuren 1 und 2 nicht dargestellte Mittel vorgesehen, welche die jeweiligen Endanschläge begrenzen. Ein Beispiel eines von diesen Mitteln ist in der Figur 5 dargestellt.

Das in der Figur 2 dargestellte Ausfuehrungsbeispiel der Anlage weicht vom in der Figur 1 dargestellten Ausfuehrungsbeispiel nur durch einige Bauelemente ab. In beiden Figuren bedeuten gleiche Bezugszeichen jeweils die gleichen Einzelheiten; daher meinen wir nicht noetig, ihre Bezeichnung und Anordnung in der Anlage der Fig.2 zu erinnern.

Der Trieb der in der Fig.2 dargestellten Anlage weist einen Laeufer 17 auf, der durch den Trieb 13 innerhalb der Fuehrung 15 in einer ersten Translationsrichtung F₁ und in einer zweiter Translationsrichtung F₂ getrieben wird, wobei die Translationsrichtungen F₁ und F₂ senkrecht auf der Flache sind, die durch eine Membran 18 der zweiten Stufe des Druckreglers 1 begrenzt wird.

Eine Feder 19 ist zwischen dem Ende des Laeufers 17 und einer Platte 20 gelegt, die die Membran 18 erstarren laesst; bewegt sich der Lauefer 17 in der Translationsrichtung F₁, so verstaerkt die Membran 18 ihre Oeffnungskraft fuer eine zwischen der ersten und der zweiten Stufe des Druckreglers 1 sich befindliche Austrittsoeffnung 21; bewegt sich der Laeufer 17 in der Translationsrichtung F₂, so verkleinert die Membran 18 ihre Oeffnungskraft fuer die Austrittsoeffnung 21.

Der Laeufer 17 ist geeignet, in einer beliebigen Stellung gestellt zu werden, die sich zwischen dem aeussersten Ausschlag in der Translationsrichtung F₁ und dem aeussersten Ausschlag in der Translationsrichtung F₂ befindet, um die von der Feder 19 an die Membran 18 uebergetragene Kraft in Abhaengigkeit von den von der Kontrolleinheit 12 an den Trieb 13 gesandten Steuerungssignalen zu veraendern, welche auf Grund von dem ersten oder dem zweiten Pegel des elektrischen vom Fuehler 11 stammenden Signals verarbeitet werden.

Auch die durch die Translationen in den Richtungen F₁ und F₂ bewirkten Endstellungen sind veränderbar, um die richtige Regelung der maximalen und/oder der minimalen Durchflusses des Brennstoffes zu erlauben; zu diesem Zweck sind bekannte und in den Figuren 1 und 2 nicht dargestellte Mittel vorgesehen, welche die jeweiligen Endanschläge begrenzen.

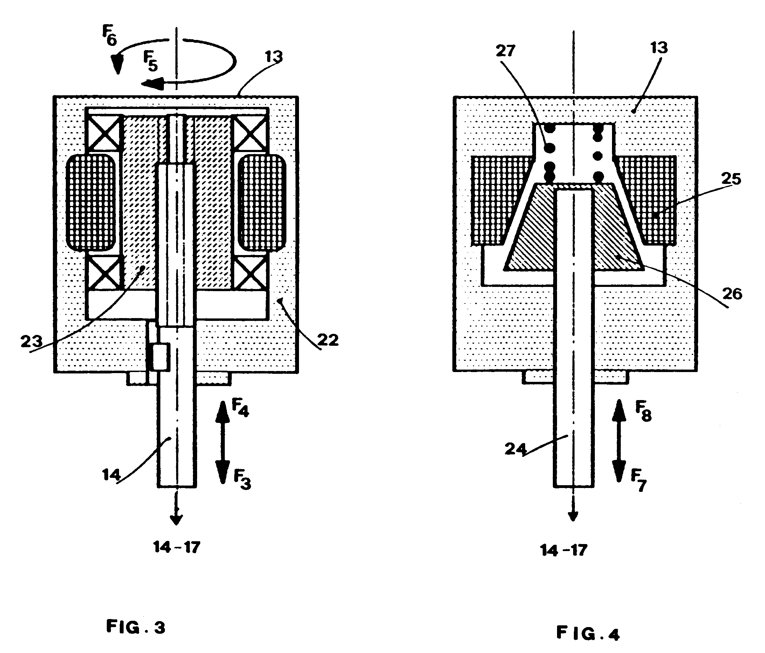

Figur 3 stellt ein erstes Ausfuehrungsbeispiel des Triebe 13 dar; in diesem Fall besteht der Trieb 13 aus einem elektrischen Motor 22, der mit der Kontrolleinheit 12 elektrisch verbunden ist, um Steuerungssignale zu bekommen, die das Drehsinn eines Rotors 23 bestimmen. Der Rotor 23 ist mit einer Stange 24 durch eine bekannten Vorrichtung kinematisch verbunden, die die Translationen der Stange 24 in den Richtungen der Pfeile F₃ und F₄ verwirklicht, waehrend der Rotor 23 jeweilig in den Drehsinnen der Pfeile F₅ und F₆ drehet.

Die Stange 24 ist mit dem Schieber 14 oder mit dem Laeufer 17 kinematisch verbunden.

Figur 4 stellt ein zweites Ausfuehrungsbeispiel des Triebs 13 dar; in diesem Fall besteht der Trieb 13 aus einem proportionalen Solenoidventil 25, das mit der Kontrolleinheit 12 elektrisch verbunden ist, um Steuerungssignale zu bekommen, die die Translationsrichtung eines beweglichen Ankers 26 gegen die Wirkung einer Feder 27 bestimmen. Der Anker 26 ist mit einer Stange 24 kinematisch verbunden, um die Stange 24 in den Richtungen der Pfeile F₇ und F₉ in Abhaengigkeit von der Stromstaerke im Solienoidventil 25 zu treiben.

Die Stange 24 ist mit dem Schieber 14 oder mit dem Laeufer 17 kinematisch verbunden.

Der in der Figur 5 dargestellte Einzelteil betrifft die Leitung 4, die den Druckregler 1 mit dem Koerper 5 verbindet; genauer betrifft der Einzelteil den durch einem Schieber 27 gesteuerten Eichungsquerschnitt 16. Eine Stange 24 verbindet den Schieber 27 mit einem Trieb 13, der aehnlich wie jene ist, die in den Figuren 3 oder 4 dargestellt sind. Der Schieber 27 ist teilweise innerhalb einer Fuehrungsbuchse 28 gelagert, die sich ausser der Leitung 4 erstreckt und die eine senkrecht auf der Symmetrieachse der Leitung 4 Symmetrieachse aufweist. Die Stange 24 durchquert ein in einer Platte 30 vorgesehenes Loch; die Platte trennt 30 die Leitung 4 aus dem Innenraum 32 einer den Trieb 13 tragenden Buchse 33, um den Fluss des gasfoermigen Kraftstoffes vor Wirbelbewegungen zu schuetzen, die den Durchfluss des Gases durch die Leitung 4 nicht ueberwachen lassen. Eine Feder 31 spannt die Platte 30 gegen eine ringfoermige Flaeche 34, die in der nach dem Innenraum 32 gekehrten Aussenwand vorgesehen ist.

Eine Regulierschraube 29 ist im Innenraum der Fuehrungsbuchse 28 eingefuehrt; die Schraube 29 weist eine Symmetrieachse auf, die mit die Symmetrieachse der Buchse 28 zusammenfaellt. Die Spitze der Schraube 29 ist geeignet, die Bewegungen des Schiebers 27 nach dem Inneneraum der Buchse 28 zu stoppen.

Treibt der Trieb 13 den Schieber 27 in der dem Innenraum der Buchse 28 entgegensetzen Richtung, so vermindert der Schieber 27 den Flaecheninhalt des Eichungsquerschnittes 16; treibt der Trieb 13 den Schieber 27 in der dem Innenraum der Buchse 28 gekehrten Richtung, so vergroessert der Schieber 27 den Flaecheninhalt des Eichungsquerschnittes 16. Mit diesem Ausfuehrungsbeispiel ist es moeglich eine genaue Regelung des Durchflusses des gasfoermigen Brennstoffes zu erreichen, wenn man die Schraube 29 betaetigt.

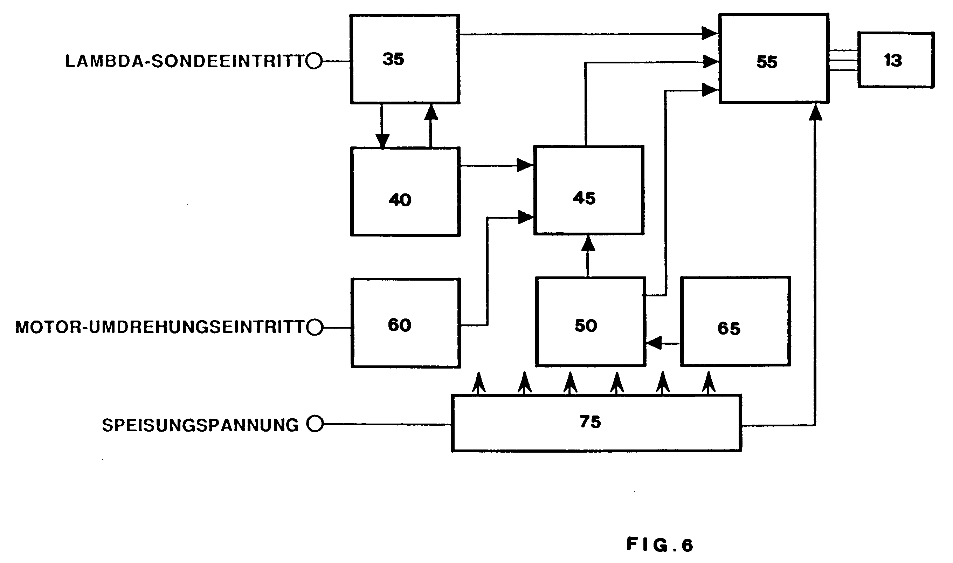

Das Blockschaltbild der Fig.6 stellt eine elektronische Kontrolleinheit 12 dar, die in einer beliebigen der in den Figuren 1, 2 und 3 dargestellten Anlagen verwendbar ist. In wesentlichem sind die folgenden elektrischen Kreise in der Kontrolleinheit 12 vorgesehen:
Ein Anpassungs-und-Schnittstellekreis 35 des Fuehlers 11, der mit dem Fuehler 11 elektrisch verbunden ist, um die Pegel des jeweiligen elektrischen Signals zu dekodieren. Auf Grund vom ersten Pegel verarbeitet der Kreis 35 ein erstes Steuerungssignal fuer einen Aussteuerungskreis 55 des Trebs 13; auf Grund vom zweiten Pegel verarbeitet der Kreis 35 ein zweites Steuerungssignal fuehr den Aussteuerungskreis 55; dazu sind die Kreise 35 und 55 elektrisch zusammenverbunden. Das erste Steuerungssignal veranlaßt den Kreis 55 den Trieb 13 so zu steuern, dass die Stange 24 sich in der Richtung bewegt, die ermoeglicht, das vom Koerper 5 gelieferten Gemisch zu überfetten; das zweite Steuerungssignal veranlaßt den Kreis 55 den Trieb 13 so zu steuern, dass die Stange 24 sich in der Richtung bewegt, die ermoeglicht, des vom Koerper 5 gelieferten Gemisch zu verarmen.

Ein Eingang und ein Ausgang des Kreises 35 sind mit einem Vielfachzeitgebungskreis 40 elektrisch so verbunden, dass der Kreis 35 an den Kreis 40 ein Signal sendet, das die Betriebsbereinschaft des Fuehlers 11 anzeigt. Die Betriebsbereinschaft des Fuehlers 11 wird durch den Kreis 40 am Ende eines bedeutungslosen Zeitraumes Festgestellt.
Am Ende dieses Zeitrauemes zeigen die Uebergaenge des Signals des Fuehlers 11 vom ersten zum zweiten Pegel eindeutig an, dass der Fuhler 11 schon in Betriebsbereinschaft ist (naemlich dass er die Betriebstemperatur erreicht hat).

Der Kreis 40 erzeugt die Zeitraeume die notwendig sind die Betriebsbereinaschaft des Fuehlers 11 zu erlauben. Der Kreis 40 speichert die Betriebsbereinschaft des Fuehlers 11 und prueft moegliche Missarbeitsweisen oder Zerlegen des Fuehlers 11 und/oder der Anlage durch einen Pruefanzeiger, z.B. eine LED, die mit dem Kreis 40 verbunden ist.

Der Kreis 40 wirkt auf den Kreis 35 waehrend drei aufeinanderfolgender Zeitraeume T₁, T₂ und T₃, die zweckmaessig erwaehlte Zeitdauer aufweisen; der erste Zeitraum T₁ faengt beim Schliessen des Zuendschluessels an.
Im Laufe des ersten Zeitraumes T₁ ist der Fuehler 11 noch unverwendbar, darum sendet der Kreis 40 an den Kreis 35 ein Signal, das den Kreis 35 unfaehig macht, an den Kreis 55 das erste oder das zweite Steuerungssignal zu senden.
Im Laufe des zweiten Zeitraumes T₂ kann das vom Fuehler 11 stammende Signal den ersten oder den zweiten Pegel aufweisen. Der erste Pegel kann sowohl einen mageren Titer des Gemisches als auch einen Schadenzustand des Fuehlers 11 oder der ganzen Anlage bezeichen (z.B. Zerlegen des Fuehlers 11, unrichtige oder beschaedigte Einstellung der Eichungsvorrichtungen der Anlage u.s.w.).

Falls das Signal des Fuehlers 11 sich am Anfang des ersten Zeitraumes T₁ im ersten Pegel befindt und, im Laufe des zweiten Zeitraumes T₂, zum zweiten Pegel umschalt, sendet der Kreis 40 an den Kreis 35 ein Signal, das den Kreis 35 veranlaßt, an den Kreis 55 das erste oder das zweite Steuerungssignal zu senden, naemlich den Trieb 13 zu steuern.

Falls das Signal des Fuehlers 11 sich im Laufe des Zeitrames T₂ im ersten Pegel befindet und zum zweiten Pegel nicht umschaltet, sendetder Kreis 40 an den Kreis 35 ein Signal, das den Kreis 35 andauernd unfaehig macht, an den Kreis 55 das erste oder das zweite Steuerungssignal zu senden.

Falls das Signal des Fuehlers 11 sich im Laufe des voelligen Zeitraumes T₂ im zweiten Pegel befindet, der einen fetten Titer des Gemisches anzeigt, sendet der Kreis 40 an den Kreis 35 am Ende des zweiten Zeitraumes T₂ ein Signal, das den Kreis 35 veranlaßt, an den Kreis 55 das erste oder das zweite Steuerungssignal zu senden, naemlich den Trieb 13 zu steuern.

Befindet sich das Signal des Fuehlers 11 im Laufe des ganzen Zeitraumes T₃ im ersten Pegel, so bedeutet das, dass die Anlage oder der Fuehler 11 beschaedigt sind; im diesem Fall sendet der Kreis 40 an den Kreis 35 das Signal, das den Kreis 35 unfaehig macht, an den Kreis 55 das erste oder das zweite Steuerungssignal zu senden; ausserdem aktiviert der Kreis 40 den Pruefanzelger, um den Fahrer vor dem Schaden der Anlage zu warnen.

Waehrend der Zeitraeume T₂ und T₃ erlaubt eine Umschaltung des Signals des Fuehlers 11 vom ersten zum zweiten Pegel, oder umgekehrt, den Wirkungsantritt des Fuehlers 11 festzustellen; im Umschaltungsfall veranlaßt der Kreis 40 den Kreis 35, an den Kreis 55 das erste oder das zweite Steuerungssignal zu senden, naemlich den Trieb 13 entweder am Ende des Zeitraumes T₂ oder im Laufe des Zeitraumes T₃ zu steuern.

Ein Ausgang des Kreises 40 steht in Verbindung mit einem Eingang eines Kreises 45, der Reset-und-Regelungsclocksignale erzeugt. Der Kreis 45 ist geeignet Grundzeitsignale waeherend der Resetphasen beim Schliessen des Zuendschluessels und waehrend der Regelungsphase des Titers bei regelmaessigem Betrieb des Motors zu erzeugen. Ausserdem weist der Kreis 45 Eingangschaltungen auf, die den Clockverlauf stoppen, wenn der Fuehler 11 unbrauchbar ist oder wenn der Motor in Schadenzustand ist (Sicherungsfunktion).

Die Kontrolleinhelt 12 umfasst einen Reset-und-Vorregelungskreis 50, der Fuer die Nulleinstellung der Zustaende des Triebs 13 beim Schliessen des Zuendschluessels sorgt; der Kreis gewährleistet 50 also die Vorregelung des Titers mittels des Triebs 13 bei den Open-Loopbetriebsphasen vor der Betriebsbereinschaft des Fuehlers 11 oder im Fall des Schadens desselben Fuehlers voranzusetzen. Ein erster Ausgang des Kreises 50 steht in Verbindung mit einem Eingang des Kreises 45; ein zweiter Ausgang des Kreises 50 steht in Verbindung mit einem Eingang des Kreises 55.

Der Aussteuerungskreis 55 fuer die Steurung des Triebs 13 weist Eingaenge auf, die mit den Ausgaengen der Kreise 35, 45 und 50 in Verbindung stehen. Mittel zur Steuerung eines von den in der Anlage verwendeten Trieben sind im Kreis 55 vorgesehen.
Der Aussteuerungskreis 55 erfuellt die Aufgabe die Signale der Richtung und der Geschwindigkeit der Bewegung des Triebs 13 zu dekodieren, um die Erreichung der Lage des Triebs 13 zu gewaehrleisten, die zur richtigen Ueberwachung des Titers des Gemisches notwendig ist.

Ein Aufbereitungs-Kreis 60 zur Aufbereitung eines den Drehzahlbereich des Motors anzeigenden Signals ist mit der Zündspule verbunden. Der Aufbereitungs-Kreis 60 verarbeitet die in der Zündspule anfallenden Impulse und normalisiert das von der Zündspule stammende Signal; außerdem zeigt der Kreis 60 eine mögliche Abstellung des Motors bei eingeschalter Zündschlüssel an, um die Sicherungsschaltungen der Anlage zu aktivieren. Ein Ausgang des Kreises 60 steht in Verbindung mit einem Eingang des Kreises 45.

Ein Vorsteuer-Kreis 65 ist in der Kontrolleinheit 12 vorgesehen, der die Lage des Triebs 13 in Abhaengigkeit von der Temperatur vorsteuert; der Kreis 65 stellt die verschiedenen Umgebungstemperaturzustaende der Anlage und des Motors 9 fest und liefert verschiedene Vorregelungswerte fuer den Trieb 13 waehrend der Open-loop Betriebsphase. Darum ist der Kreis 65 mit einem Temperaturfuehler elektrisch verbunden und weist einen Ausgang auf, der in Verbindung mit dem Kreis 55 steht.
Der Trieb 13 besteht aus einem ein elektromechanischen Wandler, dessen Zweck darin bestehet, den Flaecheninhalt des Eichungsquerschnittes 16, sowie die an die Membran 18 uebergetragene Oeffnungskraft in Abhaengigkeit von der vom Kreis 55 stammenden Schaltinformationen zu regeln, um den Durchfluss des vom Druckregler 1 an den Koerper 5 gelieferten Brennstoffes zu steuern.

Im Verhaeltnis zu der Verwendung und der Lage der Montage, kann der Trieb 13 verschiedene Gestaltungen gewinnen. Beispiele dieser Gestaltungen sind: ein proportionales Solenoidventil, ein schnelles Solenoidventil mit veraenderlichem Arbeitskreislauf, ein Schrittmotor, ein Gleichstrommotor, u.s.w.

Ein Sieb-und-Regulierungskreis 75 speist die Kreise der Kontrolleinhelt 12 und liefert die Leistungspegel, die zum verwendeten Trieb passen. Der Kreis 75 erzeugt zeitliche Einstellungen fuer die Zuendung und die Loeschung, die fuer den Betrieb den Innenzeitgebungen verwendet werden. Ausserdem steht der Kreis 75 in Verbindung mit den einzelnen Kreisen der Kontrolleinheit 12.

## Patentansprüche

1. Regulierungsanlage mit Rückeinwirkung des Titers des Luft-Kraftstoffgemisches zur Speisung eines Verbrennungsmotors, insbesonders eines mit gasförmigem Brennstoff gespeisten Motors, die folgende Glieder umfaßt:
einen mit einem Behälter für einen gasförmigen oder flüssigen Brennstoff verbundenen Verdampfer-Druckregler (1);
einem zwischen dem Druckregler (1) und einem Körper (5) eines Drosselventils angeordnete Leitung (4), um verdampften Brennstoff vom Druckregler (1) an den Körper (5) zu senden;
einen Verbrennungsmotor (9), der mit einer Aunsaugleitung (7) ausgestattet ist, um das Luft-Kraftstoffgemisch in eine Verbrennungskammer (8) des Motors (9) zu führen;
einen Auslaß (10) für die Abgase aus der Verbrennungskammer (8);
einen innerhalb des Auslasses (10) vorgesehenen Sauerstoff-Fühler (11) (λ-Sonde), um die Sauerstoffkonzentration in den Abgasen zu analysieren;
eine elektronische Kontrolleinheit (12), die mit dem Fühler (11) elektrisch verbunden ist, um ein elektrisches Signal vom Fühler (11) zu bekommen, wobei ein erster und ein zweiter Pegel des Signals je ein mageres und ein fettes Verhältinis des Luft-Kraftstoffgemisches anzeigen, wobei die Kontrolleinheit (12) mit einem Trieb (13) elektrisch verbunden ist, der mit einem beweglichen Glied (14,17,24,27) ausgestattet ist;
wobei der Trieb (13) aus einem elektromechanischen Wandler besteht;
wobei das bewegliche Glied (14,17,24,27) zwischen einem ersten Endanschlag (A,F) und einem zweiten Endanschlag (B,F) läuft und ein Eichungsorgan (16,18) der Anlage betätigt, um den Durchfluß des vom Druckregler (1) an den Körper (5) gelieferten Brennstoffes zu steuern;
dadurch gekennzeichnet, daß Regulierungsmittel (29) vorgesehen sind, die den ersten (A,F) Endanschlag und/oder den zweiten (B,F) Endanschlag begrenzen, um die richtige Regelung des maximalen und/oder des minimalen Durchflusses des Brennstoffes zu erlangen;
wobei die Kontrolleinheit (12) mit Steuerungskreisen (40,45,50) ausgestattet ist, die die λ-Regelung bei festgestellten Fehlern des Fühlers (11) und/oder der Anlage unterbinden.

2. Regulierungsanlage nach Anspruch 1, dadurch gekennzeichnet, daß Dichtungsmittel (14,17,24,30) zur Verhinderung des Eintritts des Gases von der Leitung (4) oder vom Regler (1) in den Trieb (13) zwischen dem Trieb (13) und der Leitung (4) vorgesehen sind; die Dichtungsmittel (14,17,24,30) sorgen für den Schutz des Flusses des gasförmigen Kraftstoffes vor Wirbelbewegungen, die den Durchfluss des Gases durch die Leitung (4) nicht überwachen lassen;
wobei Verbindungsmittel die Dichtungsmittel (14,17,24,30) zur Verbindung des Triebs (13) mit einem Teil (1,4) der Anlage durchqueren.

3. Regulierungsanlage nach Anspruch 1, dadurch gekennzeichnet, daß die folgenden elektrischen Kreise in der Kontrolleinheit (12) vorgesehen sind:
ein Anpassungs-und-Schnittstellenkreis (35) des Fühlers (11), der die Pegel des elektrischen Signals des Fühlers (11) dekodiert; auf Grund vom ersten Pegel verarbeitet der Schnittstellenkreis (35) ein erstes Steuerungssignal für einen Aussteuerungskreis (55) des Triebs (13); auf Grund vom zweiten Pegel verarbeitet der Schnittstellenkreis (35) ein zweites Steuerungssignal für den Aussteuerungskreis (55);
das erste Steuerungssignal veranlaßt den Aussteuerungskreis (55) den Trieb (13) so zu steuern, daß das bewegliche Glied (14,17,24,27) das Eichungsorgan (16,18) betätigt, um das Gemisch zu überfetten; das zweite Steuerungssignal veranlaßt den Aussteuerungskreis (55) den Trieb (13) so zu steuern, daß das bewegliche Glied (14,17,24,27) das Eichungsorgan (16,18) betätigt, um das Gemisch zu verarmen;
ein Zeitgebungskreis (40);
ein Eingang und ein Ausgang des Schnittstellenkreises (35) sind mit dem Zeitgebungskreis (40) elektrisch so verbunden, daß der Zeitgebungskreis (40) vom Schnittstellenkreis (35) ein Signal bekommt, das die Betriebsbereitschaft des Fühlers (11) anzeigt;
der Zeitgebungskreis (40) erzeugt die Zeiträume, die notwendig sind die Betriebsbereitschaft des Fühlers (11) zu erlauben, außerdem speichert der Zeitgebungskreis (40) den Wirkungszustand des Fühlers (11) und prüft mögliche Fehler des Fühlers (11) und/oder der Anlage; ist der Fühler (11) betriebsbereitet, so sendet der Zeitgebungskreis (40) an den Schnittstellenkreis (35) ein Signal, das den Schnittstellenkreis (35) veranlaßt an den Aussteuerungskreis (55) das erste oder das zweite Steuerungssignal zu senden;
im Fall eines Fehlers des Fühlers (11) und/oder der Anlage sendet der Zeitgebungskreis (40) an den Schnittstellenkreis (35) ein Signal, das den Schnittstellenkreis (35) unfähig macht, an den Aussteuerungskreis (55) das erste oder das zweite Steuerungssignal zu senden; in diesem Fall aktiviert der Zeitgebungskreis (40) einen Prüfanzeiger;
ein Clock-Kreis (45), der Reset-und-Regelungsclocksignale erzeugt; der Clock-Kreis (45) erzeugt Grundzeitsignale während der Resetphasen beim Betätigen des Zündschlüssels und während der Regelungsphase des Titers bei regelmäßigem Betrieb des Motors (9); außerdem weist der Clock-Kreis (45) Eingangsschlatungen auf, die den Clockverlauf stoppen, wenn der Fühler (11) oder die Anlage unbrauchbar ist;
ein Reset-und-Vorregelungskreis (50), der in Verbindung mit dem Aussteuerungskreis (55) steht, um für die Nulleinstellung des Triebs (13) beim Betätigen des Zündschlüssels zu sorgen und um die Vorregelung des Titers mittels des Triebs (13) bei den Open-Loop- Betriebsphasen vor der Betriebsbereitschaft des Fühlers (11) oder im Fall des Schadens desselben Fühlers (11) zu gewährleisten;
ein Aufbereitungs-Kreis (60) zur Aufbereitung eines den Drehzahlbereich des Motors (9) anzeigenden Signals, der mit der Zündspule verbunden ist; der Aufbereitungs-Kreis (60) verarbeitet und normalisiert die in der Zündspule anfallenden Impulse; außerdem zeigt der Aufbereitungs-Kreis (60) eine Abstellung des Motors bei eingeschalteter Zündschlüssel an, um die Sicherungsschaltungen der Anlage zu aktivieren;
ein Vorsteuer-Kreis (65), der die Lage des Triebs (13) in Abhängigkeit von der Temperatur vorsteuert; der Vorsteuer-Kreis (65) steht in Verbindung mit dem Reset-und-Vorregelungskreis (50); der Vorsteuer-Kreis (65) stellt die verschiedenen Umgebungstemperaturen der Anlage und des Motors (9) fest und liefert verschiedene Vorsteuerwerte für den Trieb (13) während der Open-Loop Betriebsphasen; der Vorsteuer-Kreis (65) ist mit einem Temperaturfühler elektrisch verbunden;
ein Sieb-und-Regulierungskreis (75), der die Kreise der Kontrolleinheit (12) speist und die Leistungspegel liefert, die zum verwendeten Trieb passen; der Sieb-und-Regulierungskreis (75) erzeugt zeitliche Einstellungen für die Zündung und die Löschung, die für den Betrieb der Innenzeitgebungen verwendet werden.

4. Regulierungsanlage nach Anspruch 3, dadurch gekennzeichnet, daß der Zeitgebungskreis (40) auf den Schnittstellenkreis (35) während drei aufeinanderfolgender Zeiträume (T₁,T₂,T₃) wirkt, die eine eigens zweckmäßig erwählte Zeitdauer aufweisen;
der erste Zeitraum (T₁) fängt beim Betätigen des Zündschlüssels an; im Laufe des ersten Zeitraums (T₁) sendet der Zeitgebungskreis (40) an den Schnittstellenkreis (35) das Signal, das den Schnittstellenkreis (35) unfähig macht, an den Aussteuerungskreis (55) das erste oder das zweite Steuerungssignal zu senden;
im Laufe des zweiten Zeitraums (T₂) und bei ausgefallener Umschaltung des Signals des Fühlers (11) vom ersten zum zweiten Pegel sendet der Zeitgebungskreis (40) an den Schnittstellenkreis (35) das Signal, das den Schnittstellenkreis (35) unfähig macht, an den Aussteuerungskreis (55) das erste oder das zweite Steuerungssignal zu senden;
im Laufe des zweiten Zeitraums (T₂) und bei Umschaltung des Signals des Fühlers (11) vom ersten zum zweiten Pegel oder bei Haltdauer desselben Signals im zweiten Pegel sendet der Zeitgebungskreis (40) am Ende des zeiten Zeitraums (T₂) an den Schnittstellenkreis (35) das Signal, das den Schnittstellenkreis (35) veranlaßt, an den Aussteuerungskreis (55) das erste oder das zweite Steuerungssignal zu senden;
befindet sich das Signal des Fühlers (11) im ersten Pegel im Laufe des völligen dritten Zeitraums (T₃), so sendet der Zeitgebungskreis (40) an den Schnittstellenkreis (35) das Signal, das den Schnittstellenkreis (35) unfähig macht, an den Aussteuerungskreis (55) das erste oder das zweite Steuerungssignal zu senden; außerdem aktiviert der Zeitgebungskreis (40) den Prüfanzeiger, um den Fahrer vor dem Schaden der Anlage zu warnen;
befindet sich das Signal des Fühlers (11) im zweiten Pegel im Laufe des völligen dritten Zeitraums (T₃), oder umschaltet es im Laufe des dritten Zeitraums (T₃) vom ersten zum zweiten Pegel, so sendet der Zeitgebungskreis (40) an den Schnittstellenkreis (35) das Signal, das den Schnittstellenkreis (35) veranlaßt, an den Aussteuerungskreis (55) das erste oder der zweite Signal zu senden.

5. Regulierungsanlage nach Ansprüchen 1 und 2, dadurch gekennzeichnet, daß das bewegliche Glied aus einem Schieber (27) besteht, der mit dem Trieb (13) mittels einer Stange (24) kinematisch verbunden ist, sowie das Eichungsorgan aus einem Querschnitt (16) der Leitung (4) gebildet ist; wobei der Schieber (27) teilweise innerhalb einer Führungsbuchse (28) gelagert ist, die sich außer der Leitung (4) erstreckt und die eine auf der Symmetrieachse der Leitung (4) senkrechte Symmetrieachse aufweist; wobei eine Platte (30) die Leitung (4) aus dem Innenraum (32) einer den Trieb (13) tragenden Buchse (33) trennt; wobei die Stange (24) ein in der Platte (30) vorgesehenes Loch durchquert.

6. Regulierungsanlage nach Anspruch 5, dadurch gekennzeichnet, daß eine Regulierschraube (29) im Innenraum der Führungsbuchse (20) eingeführt ist und eine Symmetrieachse aufweist, die mit der Symmetrieachse der Buchse (28) zusammenfällt; wobei die Spitze der Schraube (29) für das Stoppen der Bewegungen des Schiebers (27) nach dem Innenraum der Buchse (28) sorgt.

7. Regulierungsanlage nach Ansprüchen 1 und 2, dadurch gekennzeichnet, daß das bewegliche Glied aus einem Schieber (14) besteht, der mit dem Trieb (13) mittels einer Stange (24) kinematisch verbunden ist, sowie das Eichungsorgan aus einem Querschnitt (16) der Leitung (4) gebildet ist; wobei der Trieb (13) den Schieber (14) in eine Lage stellt, die sich zwischen einem ersten verstellbaren Endanschlage (A) und einem zweiten verstellbaren Endanschlage (B) befindet, um den Flächeninhalt des Eichungsquerschnittes (16) in Abhängigkeit von den Steurungssignalen zu ändern, welche von der Kontrolleinheit (12) an den Trieb (13) gesendet werden, wobei die Steurungssignale auf Grund von dem ersten oder dem zweiten Pegel des vom Fühler (11) stammenden elektrischen Signals verarbeitet sind.

8. Regulierungsanlage nach Anspruch 1, dadurch gekennzeichnet, daß das bewegliche Glied aus einem Läufer (17) besteht, der mit dem Trieb (13) mittels einer Stange (24) mechanisch verbunden ist, sowie das Eichungsorgan aus einer Membran (18) der zweiten Stufe des Druckreglers (1) gebildet ist; wobei sich eine Feder (19) zwischen dem Ende des Läufers (17) und einer Platte (20) befindet, durch welche sich die Membran (18) erstarren läßt; bewegt sich der Läufer (17) in einer ersten Translationsrichtung (F₁), so verstärkt die Membran (18) ihre Öffnungskraft für eine zwischen der ersten und der zweiten Stufe des Druckreglers (1) sich befindliche Austrittöffnung (21); bewegt sich der Läufer (17) in einer zweiten Translationsrichtung (F₂), so verkleinert die Membran (18) ihre Öffnungskraft für die Austrittöffnung (21); wobei der Läufer (17) in einer beliebigen Lage verstellbar ist, die sich zwischen dem äußerstem Ausschlage in der ersten Translationsrichtung (F₁) und dem äußerstem Ausschlage in der zweiten Translationsrichtung (F₂) befindet, um die von der Feder (19) an die Membran (18) übertragene Kraft in Abhängigkeit von der Kontrolleinheit (12) an den Trieb (13) gesendeten Steurungssignalen zu verändern, die auf Grund von dem ersten oder dem zweiten Pegel des vom Fühler (11) stammenden elektrischen Signals verarbeitet sind.

## Claims

1. Feedback control system of air/fuel ratio in internal combustion engines, especially in engines operating with gaseous fuel, which comprises the following elements:
a pressure regulator (1) connected to a tank for a liquid or gaseous fuel;
a pipe (4) between the regulator (1) and a throttle valve body (5) to send vaporised fuel from the regulator (1) to the body (5);
an engine (9) provided with an intake duct (7) to carry the air/fuel mixture to the combustion chamber (8) of the engine (9);
an exhaust duct (10) for the combustion gases, which come out of the combustion chamber (8);
an oxygen sensor (11) in the exhaust duct (10) to analyse the oxygen concentration in the combustion gases;
an electronic control unit (12) electrically connected to the sensor (11) to receive an electric signal from the sensor (11), a first and a second level of said signal representing, respectively, a lean or a rich mixture; the electronic control unit (12) being electrically connected to an actuator (13) provided with a movable element (14,17,24,27); the actuator (13) consisting of an electromechanical transducer;
the movable element (14,17,24,27) sliding between a first (A,F) and a second (B,F) stop position and acting on a calibration device (16,18) of the system to control the fuel amount sent by the regulator (1) to the throttle valve body (5);
characterised by the fact that regulation means are provided which delimit the first (A,F) and/or the second (B,F) stop position to obtain a right regulation of the highest and/or lowest amount of the fuel;
the control unit (12) being provided with circuits (40,45,50) which interrupt the λ-regulation in case of failure of the sensor (11) and/or the system.

2. System as in claim 1, characterised by the fact that it also includes sealing means (14,17,24,30) to prevent the gas coming out of the pipe (4) or the regulator (1) from entering the actuator (13); the sealing means (14,17,24,30) having the function of protecting the flow of fuel from vortical motions, which do not allow to control the gas amount through the pipe (4); connection means cross the sealing means (14,17,24,30) to connect the actuator (13) to a part (1,4) of the system.

3. System as in claim 1, characterised by the fact that the following electrical circuits are provided in the electronic control unit (12):
an interface and decoding circuit (35) of the sensor (11), which decodes the levels of the electric signal of the sensor (11); according to the first level, the interface circuit (35) elaborating a first control signal for a pilot circuit (55) of the actuator (13), according to the second level the interface circuit (35) elaborating a second control signal for the pilot circuit (55); the first control signal enables the pilot circuit (55) to control the actuator (13) so that the movable element (14,17,24,27) acts the calibration device (16,18) to enrich the mixture; the second control signal enables the pilot circuit (55) to control the actuator (13) so that the movable element (14,17,24,27) acts the calibration device (16,18) to lean the mixture;
a timing circuit (40);
an inlet and an outlet of the interface circuit (35) are electrically connected to the timing circuit (40) so that the timing circuit (40) receives from the interface circuit (35) a signal, which points out the working of the sensor (11);
the timing circuit (40) provides the time intervals enabling the working of the sensor (11), in addition the timing circuit (40) stores the working state of the sensor (11) and valuates the possible failure of the sensor (11) and/or the system; if the sensor (11) is working, the timing circuit (40) sends the interface circuit (35) a signal which enables the interface circuit (35) to send the pilot circuit (55) the first or the second control signal; in case of failure of the sensor (11) or the system, the timing circuit (40) sends the interface circuit (35) a signal which prevents the interface circuit (35) from sending the pilot circuit (55) the first or the second control signal; in addition the timing circuit (40) acts a gauge;
a clock circuit (45), which provides clock signals for "reset" and "regulation";
the clock circuit (45) provides timing signals during the reset phases by closing the starting key and during the phase of regulation of the air/fuel ratio by normal running of the engine; in addition, the clock circuit (45) has inhibitory inlets which stop the progress of the clock in case there is something wrong with the sensor (11) or the system;
a "reset and preregulation" circuit connected to the pilot circuit (55) which sets the initial conditions of the actuator (13) by closing of the key and controls the regulation of the air/fuel ratio through the actuator (13) in the open-loop phases before the working of the sensor (11) or in case of failure of the same sensor (11);
a "set up" circuit (60) connected to spark coil, which sets up a signal which represents the angular speed of the engine (9); the set up circuit (60) processes and normalises the missing impulses in the spark coil; in addition the set up circuit (60) indicates an eventual stop of the engine (9) in case of inserted key to activate the safety circuits of the system;
a preregulation circuit (65) which preregulates the position of the actuator (13) according to the temperature; the preregulation circuit (65) is connected to the "Reset and preregulation" circuit (50) and identifies the various environmental conditions of the system and the engine (9) and supplies the various regulation values for the actuator (13) during the open-loop phases; the preregulation circuit (65) is electrically connected to a temperature sensor, a filtering and regulating circuit (75) which feeds the circuits of the unit (12) and supplies the various levels of power suitable for the employed actuator, the filtering and regulating circuit (75) supplies the time checking of ignition and extinction which are employed for the working of internal timing means.

4. System as in claim 3, characterised by the fact that the timing circuit (40) acts the interface circuit (35) during three following time periods (T₁,T₂,T₃), whose duration is duly chosen;
period (T₁) starts by closing the key; during period (T₁) the timing circuit (40) sends the interface circuit (35) the signal which prevents the interface circuit (35) from sending the pilot circuit (55) the first and the second control signal;
during period (T₂) and in case of non-switching of the signal of the sensor (11) from the first to the second level the timing circuit (40) sends the interface circuit (35) the signal which prevents the interface circuit (35) from sending the pilot circuit (55) the first an the second control signal; during period (T₂) and in case of switching of the signal of the sensor (11) from the first to the second level or of permanence of the same signal in the second level the timing circuit (40) sends the interface circuit (35) the signal which enables the interface circuit (35) to send the pilot circuit (55) the first an the second control signal;
in case of permanence of the signal of the sensor (11) in the first level during the whole period (T₃) the timing circuit (40) sends the interface circuit (35) the signal which prevents the interface circuit (35) from sending the pilot circuit (55) the first an the second control signal; in addition it acts a gauge to inform the driver about a failure of the system;
if during period (T₃) the signal of the sensor (11) remains at the second level or switches from first to second level, the timing circuit (40) sends the interface the signal which enables the interface circuit (35) to send the pilot circuit (55) the first and the second control signal.

5. System as in claims 1 and 2, characterised by the fact that the movable element (14,17,24,27) is an obturator (27) mechanically connected to the actuator (13) by a rod (24) and that the calibration device (16) is a transversal section (16) of the pipe (4), a part of the obturator (27) being inserted in a guiding bushing (28) which develops in the external part of the pipe (4) and presents an axis of symmetry perpendicular to the axis of symmetry of the pipe (4); a plate (30) separating the pipe (4) from an internal part (32) of a bushing (33) which supports the actuator (13); the plate (30) having a hole (4) crossed by the rod (24).

6. System as in claim 5, characterised by the fact that an adjusting screw (29) is inserted in the internal part of the bushing (28); the adjusting screw (29) having an axis of symmetry which coincides with the axis of symmetry of the bushing (33); the point of the adjusting screw (29) stopping the movements of the obturator (27) in the direction of the internal part of the bushing (28).

7. System as in claims 1 and 2, characterised by the fact that the movable element (14,17,24,27) is an an obturator (14) mechanically connected to the actuator (13) by a rod (24) and that the calibration device (16) is a transversal section (16) of the pipe (4); the actuator (13) placing the obturator (14) in a position which is between a first adjustable position (A) and a second adjustable position (B) to vary the area of the calibration section (16) according to the regulation signals sent by the unit (12) to the actuator (13); the regulation signals being processed according to the first or the second level of the electrical signal supplied by sensor (11).

8. System as in claims 1 and 2, characterised by the fact that the movable element (14,17,24,27) is a slider (17) mechanically connected to the actuator by a rod (24) and that the calibration device (16) is a diaphragm (18) of the second stage of the regulator (1), a spring (19) being inserted between the end of the slider (17) and a plate (20) which stiffs the diaphragm (18); if slider (17) moves to a first direction (F₁) the diaphragm (18) increases the opening force which opens an orifice (21) between the first and second stage of the regulator (1); if slider (17) moves to a second direction (F₂) the diaphragm (18) decreases said opening force; the slider (17) is capable of being placed in any position between the limit stop in the direction (F₁) and the limit stop in the direction (F₂) to vary the force transmitted by the spring (19) to the diaphragm (18) according to the regulation signals sent by the unit (19) to the actuator (13); the regulation signals being processed according to the first or second level of the electrical signal provided by sensor (11).

## Revendications

1. Installation de réglage à rétroaction du titre du mélange air-carburant dans les moteurs à combustion interne, en particulier dans les moteurs utilisant un carburant gazeux comprenant les éléments suivants:
un réducteur-vaporisateur de pression (1) relié à un réservoir de combustible liquide ou gazeux;
une conduite (4) installée entre le réducteur (1) et une bride (5) équipée d'un papillon pour envoyer un combustible vaporisé par le réducteur (1) a la bride (5);
un moteur (9) équipé d'un conduit d'admission (7) pour amener le mélange air-combustible du conduit (5) à une chambre de combustion (8) du moteur (9);
un conduit d'échappement (10) pour les gaz combustibles qui sortent de la chambre de combustion (8);
un capteur d'oxygène (11) (Sonde Lambda) installé dans le conduit d'échappement (10) pour analyser la concentration en oxygène contenue dans les gaz de combustion;
une unité électronique de contrôle (12) reliée électriquement au capteur (11) pour recevoir un signal électrique du capteur (11), un premier et un second niveau du signal du capteur (11) représentant respectivement une composition pauvre et une composition riche du mélange, l'unité électronique de contrôle (12) étant reliée électriquement à un actionneur (13) pourvu d'un organe mobile (14,17,24,27); l'actionneur (13) étant constitué d'un transducteur électro-mécanique;
l'organe mobile (14,17,24,27) glissant entre une première (A,F) et une seconde (B,F) position de fin de course et agissant sur un élément de tarage (16,18) de l'installation pour contrôler le débit du carburant envoyé par le réducteur (1) à la bride du papillon (5);
caractérisée par le fait que sont prévus des moyens de réglage (29) qui délimitent la première (A,F) et/ou la seconde (B,F) position de fin de course afin d'obtenir un réglage du débit maximum et/ou du débit minimum du carburant;
l'unité de contrôle (12) étant équipée (12) de circuits (40,45,50) qui interrompent le réglage λ en cas d'erreur de la part du capteur (11) et/ou de l'installation.

2. Installation selon la Rev.1, caractérisée par le fait qu'elle comprend en plus des moyens d'étanchéité (14,17,24,30) empéchant le passage du gaz hors de la conduite (4) ou du réducteur (1) à l'actionneur (13), afin d'éviter la formation de turbulences qui entravent le contrôle de l'admittance du gaz dans la conduite (4); des éléments de raccordement traversant les moyens d'étanchéité (14,17,24,30) pour relier l'actionneur (13) à une partie (1,4) de l'installation.

3. Installation selon la Rev.1, caractérisée par le fait que dans l'unité électronique de contrôle (12) sont prévus les circuits électriques suivants:
un circuit d'interface et de conditionnement (35) du capteur (11), qui décode les niveaux du signal électrique du capteur (11); sur la base du premier niveau le circuit d'interface (35) élabore un premier signal de commande pour un circuit de pilotage (55) de l'actionneur (13); sur la base du second niveau le circuit d'interface (35) élabore un second signal de commande pour le circuit de pilotage (55); le premier signal de commande autorise le circuit de pilotage (55) à piloter l'actionneur (13) de façon à ce que l'organe mobile (14,17,24,27) intervienne sur l'élément de tarage (16,18) pour enrichir le mélange; le second signal de commande autorise le circuit de pilotage (55) à piloter l'actionneur (13) de façon à ce que l'organe mobile (14,17,24,27) intervienne sur l'élément de tarage (16,18) pour apauvrir le mélange;
un circuit temporisateur multiple (40);
une entrée et une sortie de circuit d'interface (25) sont reliés électriquement avec un circuit temporisateur (40) de façon à ce que le circuit temporisateur (40) reçoive du circuit d'interface (35) un signal qui indique l'entrée en action du capteur (11);
le circuit tempotisateur (40) engendre les temporisations nécessaires pour permettre l'entrée en action du capteur (11), en plus le circuit temporisateur (40) mémorise l'état d'activité du capteur (11) et diagnostique les erreurs éventuelles du capteur (11) et/ou de l'installation; si le capteur (11) est en action, le circuit temporisateur (40) envoie au circuit d'interface (35) un signal qui autorise le circuit d'interface (35) à envoyer au circuit de pilotage (55) le premier ou le second signal de commande; en cas d'erreur de la part du cap teur (11) ou de l'installation, le circuit temporisateur (40) envoie au circuit d'interface (35) un signal qui empêche le circuit d'interface (35) d'envoyer au circuit de pilotage (55) le premier ou le second signal de commande; dans ce cas le circuit temporisateur (40) active un voyant;
un circuit d'horlogerie (45) qui engendre des signaux d'horlogerie de "reset" et "réglage"; le circuit d'horlogerie (45) engendre des signaux de base temps durant les phases de reset au moment de la fermeture de la clé de démarrage et durant la phase de réglage du titre dans le fonctionnement normal du moteur; en outre le circuit d'horlogerie (45) présente des entrées de blocage qui stoppent le processus d'horlogerie si le capteur (11) ou l'installation sont hors de marche;
un circuit de Reset et Pré-réglage (50) en liaison avec le circuit de pilotage (55) pourvoyant à la remise à zéro des conditions d'état de l'actionneur (13) à l'acte de la fermeture de la clé de démarrage et pour fixer à l'avance le réglage du titre au moyen de l'actionneur (13) dans les phases de fonctionnement sans rétroaction du moteur avant l'entrée en action du capteur (11) ou en cas d'avarie de ce capteur (11);
un circuit de conditionnement (60) relié à la bobine d'allumage pour le conditionnement d'un signal qui représente le régime de rotation du moteur (9); le circuit de conditionnement (60) reconnaît et normalise les impulsions manquantes dans la bobine; en outre le circuit de conditionnement (60) indique un éventuel arrêt du moteur (9), la clé insérée, pour activer les circuits de sécurité de l'installation;
un circuit de pré-réglage (65) qui règle préalablement la position de l'actionneur (13) en fonction de la température; le circuit de pré-réglage (65) est en liaison avec le circuit de Reset et Pré-réglage (50); le circuit de pré-réglage (65) identifie les différentes conditions d'environnement de l'installation et du moteur et fournit les différentes valeurs fixées à l'avance pour l'actionneur (13) durant les phases de fonctionnement sans rétroaction du moteur; le circuit de pré-réglage (65) est relié électriquement à un capteur de température;
un circuit de filtrage et de réglage (75) qui alimente les circuits de l'unité (12) et fournit les niveaux de puissance adaptés à l'actionneur utilisé; le circuit de filtrage et réglage (75) produit des contrôles temporels d'allumage et d'extinction qui sont utilisés pour le fonctionnement des temporisations internes.

4. Installation selon la Rev.3, caractérisée par le fait que le circuit temporisateur (49) intervient sur le circuit d'interface (35) en trois périodes de temps successifs (T₁,T₂,T₃) de durée choisie opportunément;
la période (T₁) commence au moment de la fermeture de la clé de démarrage; durant la période (T₁) le circuit temporisateur (40) envoie au circuit d'interface (35) le signal qui empêche le circuit d'interface (35) d'envoyer au circuit de pilotage (35) le premier et le second signal de commande;
lors de la période (T₂) et en cas de commutation manquante du signal du capteur (11) du premier au second niveau le circuit temporisateur (40) envoie au circuit d'interface (35) le signal qui empêche le circuit d'interface (35) d'envoyer au circuit de pilotage (55) le premier et le second signal de commande; durant la période (T₂) et en cas de commutation advenue du signal du capteur (11) du premier au second niveau ou de permanence du signal du capteur (11) dans le second niveau le circuit temporisateur (40) envoie au circuit interface (35) le signal qui autorise le circuit d'interface (35) à envoyer au circuit de pilotage (55) le premier et le second signal de commande;
en cas de permanence du signal du capteur (11) dans le premier niveau pour toute la période (T₃) le circuit temporisateur (40) envoie au circuit d'interface (35) le signal qui empêche le circuit d'interface (35) d'envoyer au circuit de pilotage (55) le premier et le second signal de commande et en outre active le voyant pour avertir le conducteur de l'avarie de l'installation;
si lors de la période (T₃) le signal du capteur (11) se maintient au second niveau et commute du premier au second niveau le circuit temporisateur (40) envoie au circuit d'interface (35) le signal qui autorise le circuit d'interface (35) à envoyer au circuit pilotage (55) le premier et le second signal de commande.

5. Installation selon les Rev. 1 et 2, caractérisée par le fait que l'organe mobile (14,17,24,27) est un obturateur (27) mécaniquement relié à l'actionneur (13) au moyen d'une tige (24) et l'élément de tarage est une section (16) transversale de la conduite (4); l'obturateur (27) est partiellement logé dans un manchon (28) qui s'étend au-delà de la conduite (4) et qui présente un axe de symétrie perpendiculaire à l'axe de symétrie de la conduite (4); un plateau (30) divisant le conduit (4) d'une partie interne (32) d'un manchon (33) qui soutient l'actionneur (13); le plateau (30) présentant une perforation traversée par la tige (24).

6. Installation selon la Rev. 5, caractérisée par le fait qu'une vis de réglage (29) est introduite dans la partie intérieure du manchon (28);
la vis (29) présentant un axe de symétrie qui coïncide avec l'axe de symétrie du manchon (33);
la pointe de la vis (29) arrêtant les mouvements de l'obturateur (27) dans le sens tourné vers la partie intérieure du manchon (28).

7. Installation selon les Rev. 1 et 2, caractérisé par le fait que l'organe mobile (14,17,24,27) est un obturateur (14) mécaniquement relié à l'actionneur (13) par une tige (24) et l'élément de tarage est une section transversale (16) de la conduite (4); l'actionneur (13) dispose l'obturateur (14) dans une position comprise entre une première position réglable (A) et une seconde position réglable (B) pour varier l'aire de la section de tarage (16) en fonction des signaux de commande envoyés par l'unité (12) à l'actionneur (13); les signaux de commande étant élaborés sur la base du premier et du second niveau du signal électrique qui provient du capteur (11).

8. Installation selon les Rev.1 et 2, caractérisée par le fait que l'organe mobile (14,17,24,27) est un curseur (17) mécaniquement relié à l'actionneur (13) par une tige (24) et l'élément de tarage est le diaphragme (18) du second stade du réducteur (1); un ressort (19) est interposé entre l'extrémité du curseur (17) et un plateau (20) qui raidit le diaphragme (18); lorsque le curseur (17) passe dans un premier sens (F₁) le diaphragme (18) augmente sa force d'ouverture d'un orifice de passage (21) entre le premier et le second stade du réducteur (1) et quand le curseur (17) passe dans un second sens (F₂) le diaphragme (18) diminue sa force d'ouverture de l'orifice (21), le curseur (17) étant apte à être disposé dans une position quelconque comprise entre l'excursion maximum dans le sens (F₁) et l'excursion maximum dans le sens (F₂), de façon à varier la force transmise par le ressort (19) au diaphragme (18) en fonction des signaux de commande envoyés à l'unité (12) de l'actionneur (13) qui sont élaborés sur la base du premier ou du second niveau du signal électrique qui provient du capteur (11).
